# EUROPÄISCHE PATENTANMELDUNG

(11) **EP 1 522 576 A1**
(43) Veröffentlichungstag der Anmeldung: **13.04.2005**
(21) Anmeldenummer: 04023564.0
(22) Anmeldetag: 04.10.2004
(51) Int. Cl.: C12G 3/02, A23L 2/38, A23L 1/30

(54) **Erfrischungs- Gärgetränk**

(30) Priorität: 06.10.2003 CH 16862003
(71) Anmelder: Kauffer, Markus, 8820 Wädenswil (CH)
(72) Erfinder: Kauffer, Markus, 8820 Wädenswil (CH)

(57) **Zusammenfassung**

Die Erfindung betrifft ein Verfahren zur Herstellung eines Erfrischungs- Gärgetränks aus Wasser, Brot, Zucker und Hefe. Das so hergestellte Getränk kann sowohl als Durstlöscher, wie auch als Nahrungsergänzung angewendet werden.

## Beschreibung

Die Erfindung betrifft ein Verfahren zur Herstellung eines Erfrischungs- Gärgetränks aus Wasser, Brot, Zucker und Hefe, sowie ein nach diesem Verfahren hergestelltes Erfrischungs-Gärgetränk.

Das erfindungsgemässe Getränk ist angelehnt an die uralte Tradition der Kwass- Herstellung in Russland. Als bereits bekanntes Produkt auf dem Markt findet sich der "Kanne- Brottrunk", der aber in seinem Nutzen und in seiner Herstellung eine andere Richtung, als die des vorgeschlagenen Erfrischungsgetränkes einschlägt.
Eine Aufgabe der vorliegenden Erfindung ist es, ein weiteres Getränk auf Basis dieser Tradition bereit zustellen, wobei das erfindungsgemässe Getränk äusserst wohlschmeckend ist und positive Wirkungen auf den körperlichen Organismus hat. Das erfindungsgemässe Getränk ist ein Wellnessgetränk, das Vitamine und Mineralstoffe enthält.

Für das entwickelte Erfrischungsgetränk wird Vollkornbrot (mit einem erhöhten Anteil an Roggenbrot) in heissem Wasser eine bestimmte Zeit lang ausgelaugt. Nach dem Entfernen des Brotes aus der Flüssigkeit wird dieses so gewonnene "Brotwasser" durch die Zugabe von Hefe, Zucker und weiteren Komponenten eine bestimmte Zeit lang vergoren. Nach dem Passieren des vergorenen "Brotwassers" wird die Flüssigkeit durch Zugabe von natürlichen Geschmacksgebern unter nahezu kompletten Sauerstoffentzug einige Tage in der Kühlung weiter vergoren. Nach Ablauf dieser Zeit wird die Flüssigkeit erneut passiert und mit Fruchtpüree und Zucker neu versetzt. Schon nach wenigen Stunden kommt eine zweite Gärung in Gang, die einige Tage, dicht verschlossen, ohne Sauerstoffkontakt und gekühlt gelagert, erhalten bleibt. Das so gewonnene Getränk ist nun genussfertig, dazu noch äusserst erfrischend und geschmacklich einzigartig.

Dieses Verfahren ist zum Teil von der russischen Kwass- Herstellung abgeleitet. Das Endergebnis ist jedoch keinesfalls damit zu vergleichen, da abgesehen von dem abgeänderten Produktionsweg bei einem früher oder auch heute entwickelten Kwass kein weiterer zweiter Vergärungsprozess durch die Zugabe von Früchten und Zucker vorgesehen war und ist. Das

Resultat ist ein sehr wohlschmeckendes Getränk.

Vorteile:
- Ökonomisch äusserst sinnvoll, durch die Verarbeitung von nicht verkauftem "Altbrot"
- Gesundes und wohlschmeckendes Getränk mit Vitalstoffen. Dazu zählen: Selen, Zink, Kupfer, Mangan, Eisen, Magnesium, Kalzium, Kalium, Teile des Vitamin B- Komplexes und Vitamin E
- Günstige Rohstoffe aufgrund der Hauptbestandteile Wasser und Brot
- Relativ einfache Herstellung

Die benötigten *Zutaten* für das Getränk sind:
1. Schritt

| | |
|---|---|
| 5kg | Roggenvollkombrot |
| 5kg | Vollkornbrot divers |
| 800g | Hefe |
| 2kg | Zucker |
| 11 | lauwarmes Wasser |
| 8 Bund | Pfefferminze |
| 300g | Limonenblätter |
| 801 | Wasser |

2. Schritt

| | |
|---|---|
| 500g | Rosinen |
| 500g | Ingwer |
| Schale | von 10 unbehandelten Zitronen |
| Schale | von 10 unbehandelten Limonen |
| Schale | von 10 unbehandelten Orangen |
| 5 Bund | Pfefferminze |

3. Schritt
auf 20 Liter Grundfond (siehe Zubereitung von Schritt 1 und Schritt 2) werden benötigt:

| | |
|---|---|
| 2kg | Fruchtpüree (für den Prototyp mit Passionsfruchtmark getestet) |
| 2kg | Zucker |

***Zubereitung:***
1. Schritt:
   Das gesamte Brot in Scheiben schneiden und im Ofen trocknen (darf leicht geröstet sein). Die 80 Liter Wasser in einem Topf zum Kochen bringen, das getrocknete Brot hinzugeben und nicht mehr kochen lassen. Das Brot 12 Stunden lang in der Flüssigkeit auskühlen und auslaugen lassen. Danach zuerst durch ein engmaschiges Sieb, dann nochmals durch ein Tuch passieren. Die Hefe mit 500g Zucker und dem lauwarmen Wasser verrühren und an einem warmen Ort etwa 20 Minuten gehen lassen. Das Hefe- Zucker- Wassergemisch mit den restlichen 1,5kg Zucker zu dem passierten "Brotwasser" geben. Nun die gewaschene Pfefferminze und die gewaschenen Limonenblätter hinzufügen. Die so entstandene Flüssigkeit nur mit einem Tuch bedeckt 12 Stunden bei Zimmertemperatur stehen und arbeiten lassen.
2. Schritt:
   Nach Ablauf der 12 Stunden das Ganze erneut durch ein engmaschiges Sieb passieren und die Litermenge feststellen. Der Menge entsprechend saubere 31- Einmachgläser (mit Dichtungs- und Spannring) parat stellen, die Rosinen, den Ingwer, die Zitronenschale, die Limonenschale, die Orangenschale und die Pfefferminze gleichmässig darin verteilen. Die Flüssigkeit in die präparierten Gläser füllen und luftdicht verschliessen. Die Gläser bei 5° Celsius vier bis fünf Tage stehend lagern. Sobald die Rosinen an der Oberfläche schwimmen, ist der zweite Prozess abgeschlossen. Die vergorene Flüssigkeit wird nun ein letztes Mal durch ein engmaschiges Sieb passiert und zur länger gedachten Aufbewahrung zurück in saubere 31- Einmachgläser mit Dichtungs- und Spannring gegeben. Bei 5° Celsius luftdicht verschlossen ist dieses Grundprodukt mindestens 4 Wochen haltbar.
3. Schritt:
   Um die bisher produzierte Flüssigkeit trinkbar zu machen, müssen auf 20 Liter dieses Grundfonds 2 Liter Fruchtpüree (bisher getestet mit zuckerfreiem Passionsfruchtmark), in dem 2kg Zucker aufgelöst werden, zugegeben und gründlich verrührt werden. **Das heisst auf 20 Liter Grundfond kommen 21 zuckerfreies Fruchtpüree und 2kg Zucker.** Wichtig hierbei ist, dass die gesamte Flüssigkeit nicht unnötig erwärmt wird. Das abgeschmeckte Getränk wird wiederum in saubere 31- Einmachgläser mit Dichtungs- und Spannring gefüllt und bei 5° Celsius luftdicht gelagert. Eine natürliche zweite Gärung wird eingeleitet. Schon nach 12 Stunden bildet sich eine feine Kohlensäure und ein unnachahmlicher Geschmack. Das Erfrischungs-Gärgetränk aus Brot und Früchten ist entstanden und in diesem abgeschmecktem Zustand bei luftdichter und gekühlter Lagerung (5° Celsius) etwa 5 Tage haltbar. Da sich bei dem fertigen Getränk ein kräftiger Bodensatz bildet, ist vor dem Verbrauch ein Umrühren oder Schütteln von Nöten.

## Patentansprüche

1. Verfahren zur Herstellung eines Erfrischungsgetränks **gekennzeichnet durch** die folgenden Herstellungsstufen:
a) Schneiden eines Vollkornbrotes in Scheiben
b) Trocknen des Vollkornbrotes im Ofen
c) Erhitzen von Wasser bis zum Siedepunkt
d) Zugeben des geschnittenen und getrockneten Vollkornbrotes und Ziehenlassen des zugegebenen Vollkornbrotes während 12 Stunden in dem erhitzten Wasser, das während dem Ziehenlassen des Vollkornbrotes auskühlt
e) Passieren der so entstandenen Wasser- Vollkornbrot- Mischung.
f) Separates Gehenlassen einer Hefe- Zucker- Wassermischung während 20 Minuten
g) Zugeben und Verrühren der Hefe- Zucker- Wassermischung mit zusätzlichem Zucker zur passierten Wasser- Vollkornbrot- Mischung, womit eine Gärung eingeleitet wird
h) Zugeben von Pfefferminze und von Limonenblättern
i) Stehenlassen der so entstandenen Mischung während 12 Stunden bei Zimmertemperatur unter gelegentlichem Umrühren
j) Passieren der nach der Gärung entstandenen Mischung
k) Zugeben von Rosinen, Ingwer, Zitronenschale, Limonenschale, Orangenschale und Pfefferminze
l) Stehendes und luftdichtes Lagern der so entstandenen Mischung bei 5°C während vier bis fünf Tagen
m) Passieren der abgestandenen Mischung
n) Luftdichtes Abfüllen und stehendes Lagern der so entstandenen Mischung bei 5°C

2. Verfahren nach Anspruch 2 ferner **gekennzeichnet durch** Zugabe von Zucker und Fruchtmark bei Herstellungsstufe m), womit eine weitere Gärung eingeleitet wird.

3. Erfrischungsgetränk, hergestellt nach Anspruch 1 oder 2.
